# EUROPÄISCHE PATENTSCHRIFT

(11) **EP 2 083 179 B1**
(45) Veröffentlichungstag und Bekanntmachung des Hinweises auf die Patenterteilung: **12.10.2011**
(21) Anmeldenummer: 08172210.0
(22) Anmeldetag: 18.12.2008
(51) Int. Cl.: F16B 13/14

(54) **Verbindungselement**
Connecting element
Elément de liaison

(30) Priorität: 25.01.2008 DE 202008001095 U
(43) Veröffentlichungstag der Anmeldung: 29.07.2009
(73) Patentinhaber: Hettich-Heinze GmbH & Co. KG, 32139 Spenge (DE)
(72) Erfinder: Sobolewski, Uwe, 32257 Bünde (DE); Andschus, Stefan, 32312 Lübbecke (DE); Schael, Oliver, 32278 Kirchlengern (DE); Gorges, Alexander, 33790 Halle/Westf. (DE)
(74) Vertreter: Dantz, Jan Henning

(56) Entgegenhaltungen:
- WO-A1-2009/052802
- WO-A2-2009/026874
- DE-A1- 10 143 866
- FR-A1- 2 826 072
- US-A- 4 425 065
- US-A- 4 428 705

## Beschreibung

Die vorliegende Erfindung betrifft ein Verbindungselement, insbesondere zur Befestigung eines Beschlagteiles an einer Leichtbauplatte, mit einer Hülse, in der ein Bolzen verschiebbar gehalten ist, wobei der Bolzen zur Befestigung des Verbindungselementes an einer Leichtbauplatte von einer hervorstehenden Ausgangsposition in die Hülse in eine Montageposition einschiebbar ist.

Die EP 0 919 733B1 offenbart einen Dübel zur Befestigung von Möbelbeschlagteilen, bei dem an einer inneren Aussparung eine Aufnahme für Klebstoff ausgebildet ist. Der Klebstoff ist von einer zerstörbaren Kapsel umgeben und kann bei der Montage durch das Zusammendrücken des Dübels zum Verkleben freigesetzt werden. Falls die seitliche Anpresskraft zur Zerstörung der Kapsel mit Klebstoff nicht ausreicht, erfolgt kein Verkleben. Zudem sind die Haltekräfte des Dübels in einer Sacklochbohrung begrenzt.

Die DE 33 22 397 A1 zeigt eine Befestigungsvorrichtung mit einem Zwischenglied, das hülsenförmig ausgebildet ist und an einer Bohrung einer Platte einfügbar ist. In das Zwischenglied wird ein Dübel eingefügt, der ein aufspreizbares Ende besitzt, das durch Einfügen einer Schraube aufgeweitet werden kann. Solche Befestigungsmechaniken eignen sich insbesondere für Wände, allerdings können gerade bei Leichtbauplatten die Klemmkräfte in radiale Richtung nicht ausreichend zur Befestigung von Verbindungselementen eingesetzt werden.

Die DE 82 02 679 U1 offenbart eine weitere Verankerung für einen Spreizdübel an einer Wand, wobei an einer Stirnseite eines verschiebbaren Bolzens eine Klebemasse in einer Glasampulle angeordnet ist. Bei der Montage wird die Glasampulle zerstört, um den Bolzen zusammen mit einer umgebenden Hülse zu verkleben.

Aus der WO 2006/106131 A1 ist ein Verbindungseinsatz bekannt, bei dem ein Innenteil in eine Außenhülse eingefügt ist, wobei zum Verkleben des Verbindungseinsatzes ein Klebstoffzuführkanal ausgebildet ist. Dadurch lässt sich eine gute Verteilung des Klebstoffes erreichen, allerdings sind weitere mechanische Haltemittel nicht vorgesehen.

Die US 4 425 065 offenbart ein Verbindungselement mit einer Hülse, einem Klebstoffreservoir und einem in die Hülse einschiebbaren Kolben, mittels dem das Klebstoffreservoir aus der Hülse herausgedrückt werden kann. Beim Eindrücken des Kolbens können dann zusätzlich Spreizarme nach außen gedrückt werden, die über den Klebstoff in der aufgespreizten Position fixiert werden. Das Verbindungselement ist auf oder in einer Platte verklebbar.

In der US 4 428 705 ist ein Spreizdübel offenbart, der in einer Leichtbauplatte fixiert werden kann. Hierfür wird der Spreizdübel in eine Sacklochbohrung eingeschoben und dann an der zur Öffnung gewandten Seite mit einem Einsatz versehen, an dem weitere Bauteile fixiert werden können. Anschließend kann durch Injektion von Klebemittel der Spreizdübel in der Leichtbauplatte verklebt werden.

Es ist daher Aufgabe der vorliegenden Erfindung ein Verbindungselement, insbesondere zur Befestigung eines Beschlagteiles an einer Leichtbauplatte zu schaffen, das leicht zu montieren ist und einen sicheren Halt gewährleistet.

Diese Aufgabe wird mit einem Verbindungselement mit den Merkmalen des Anspruches 1 gelöst.

Erfindungsgemäß ist an der Hülse mindestens ein verschwenkbarer Spreizarm ausgebildet, der beim Einschieben des Bolzens nach außen verschwenkt wird, um eine Deckschicht benachbart zu der Hülse zu hintergreifen, und der Bolzen und die Hülse sind in der Montageposition mittels Klebstoff aneinander fixiert. Prinzipiell genügt ein Spreizarm. Eine Anordnung jedoch von mehreren Spreizarmen, die sich jeweils an der Hülse gegenüberstehen, erweist sich als vorteilhaft.

Dadurch werden die Haltekräfte durch die mechanischen Spreizarme als auch durch den Klebstoff miteinander kombiniert, so dass das Verbindungselement in der Montageposition vergleichsweise hohe Haltekräfte bereitstellen kann. Das Verbindungselement kann dabei zur Befestigung eines Beschlagteiles an einer Leichtbauplatte dienen, so dass die mechanische Verriegelung über die Spreizarme günstig mit der Fixierung über den Klebstoff kombiniert wird.

Gemäß der Erfindung ist in der Hülse benachbart zu einer Stirnseite des Bolzens in der Ausgangsposition ein Klebstoffreservoir gebildet. Dadurch kann das Verbindungselement als vormontierte Einheit ausgeliefert werden, bei der der Klebstoff bereits in der Hülse aufgenommen ist. Der Klebstoff kann dabei für eine lange Haltbarkeit in einer Umhüllung eingekapselt sein, um dann durch den Bolzen aus der Verkapselung gedrückt zu werden. Alternativ oder zusätzlich ist es möglich, dass der Klebstoff als Thermoplast ausgebildet ist und durch Wärmeeinwirkung verflüssigt werden kann. Dies kann auch durch eine externe Wärmequelle, beispielsweise über ein elektromagnetisches oder ein elektrisches Wechselfeld erfolgen, das den Klebstoff direkt aufheizt oder durch Konvektion über ein Metallteil beispielsweise dem Bolzen in unmittelbarer Nähe des Klebstoffs.

Vorzugsweise sind an dem Bolzen und/oder den Spreizarmen Anlaufschrägen zum Verschwenken der Spreizarme beim Einschieben des Bolzens ausgebildet. Dadurch wird mit einfachen Mitteln erreicht, dass die Spreizarme eine Deckschicht einer Leichtbauplatte hintergreifen können und somit das Verbindungselement gegen ein Herausziehen sichern können.

Um das Verbindungselement als vormontierte Einheit liefern zu können, ist der Bolzen vorzugsweise in der Ausgangsposition verrastet. Auch das Klebstoffreservoir kann klemmend an der Hülse vorfixiert sein. Der Bolzen kann dabei eine kegelstumpfförmige Verjüngung aufweisen, in die ein nach innen hervorstehender Vorsprung an den Spreizarmen im Wesentlichen formschlüssig eingreift, so dass ein Verschieben des Bolzens relativ zu der Hülse nur mit einer gewissen Kraft erfolgen kann.

Für eine gleichmäßige Verteilung des Klebstoffes weist die Hülse benachbart zu dem Klebstoffreservoir mehrere radiale Öffnungen auf, durch die der Klebstoff vom Einschieben des Bolzens austreten kann. Die radialen Öffnungen können dabei über den gesamten Umfang der Hülse verteilt sein, so dass ein allseitiges Verkleben der Hülse und des Bolzens an der Stirnseite mit der Deckschicht ermöglicht wird.

Gemäß der Erfindung sind die Spreizarme benachbart zu einem oberen Ring an der Hülse angeordnet. Dabei kann an dem Ring mindestens eine Ausnehmung vorgesehen sein, in die ein Vorsprung an dem Bolzen beim Einschieben rastend einfügbar ist. Wenn in den Bolzen anschließend ein Befestigungselement in einen sich in Längsrichtung erstreckenden Kanal eingefügt wird, dann liegt der Vorsprung an dem Bolzen klemmend in der Ausnehmung in der Hülse, so dass ein versehentliches Lösen des Bolzens an der Hülse sicher vermieden wird.

Erfindungsgemäß wird auch eine Leichtbauplatte bereitgestellt, bei der mindestens ein Verbindungselement vorgesehen ist. Die Leichtbauplatte kann dabei zwei Deckschichten, beispielsweise aus Pappe oder einem Holzfaserwerkstoff aufweisen, zwischen denen eine mit Hohlräumen versehene Zwischenlage angeordnet ist. Die Hülse und der Bolzen können dann so montiert sein, dass an einer Innenseite der Deckschicht der Bolzen und die Hülse verklebt sind.

Die Erfindung wird nachfolgend anhand eines Ausführungsbeispieles mit Bezug auf die beigefügten Zeichnungen näher erläutert. Es zeigen:
- Figur 1: eine Seitenansicht eines erfindungsgemäßen Verbindungsele- mentes;
- Figur 2: eine geschnittene Seitenansicht des Verbindungselementes der Figur 1 in der Ausgangsposition, und

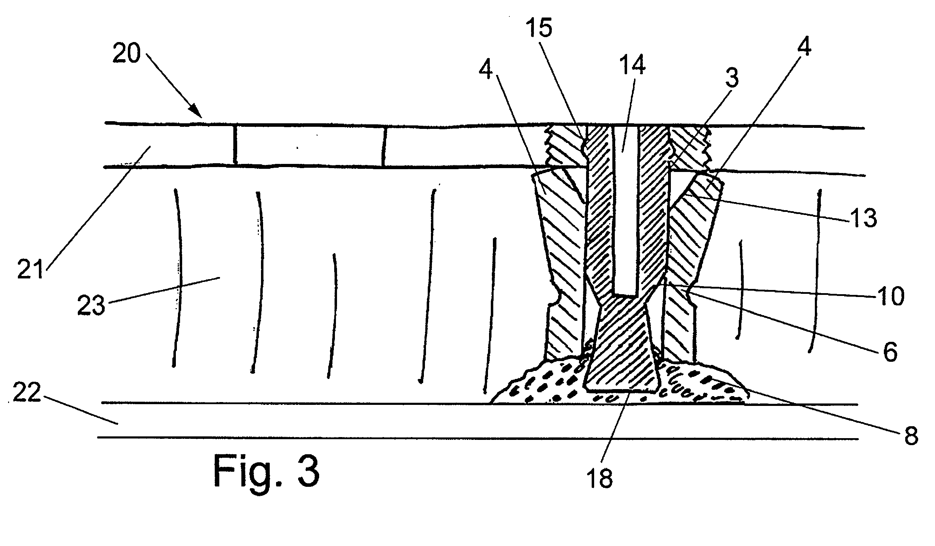

- Figur 3: eine geschnittene Seitenansicht des Verbindungselementes der Figur 1 in einer montierten Position.

Ein Verbindungselement 1 umfasst eine Hülse 2, vorzugsweise aus einem biegbaren Material, wie Kunststoff, und einen axial relativ zu der Hülse 2 verschiebbaren Bolzen 3, der ebenfalls aus Kunststoff bestehen kann. Die Hülse 2 ist im Wesentlichen rohrförmig ausgebildet und umfasst am Umfang in einem mittleren Bereich vorzugsweise zwei an gegenüberliegenden Seiten angeordnete Spreizarme 4, die über einen U-förmigen Schlitz 5 von der Hülsenwand getrennt sind. Die Spreizarme 4 sind über eine Materialverjüngung 6 mit der Wand der Hülse 2 verbunden und können nach außen verschwenkt werden.

Die Hülse 2 umfasst an einer oberen Seite einen Ring 7, an dem ringförmige Rippen ausgebildet sind, die an einer kreisförmigen Öffnung eines Bauteils klemmend anlegbar sind. An einer unteren Seite umfasst die Hülse 2 mehrere Öffnungen 9, die gleichmäßig über den Umfang der Hülse 2 verteilt sind.

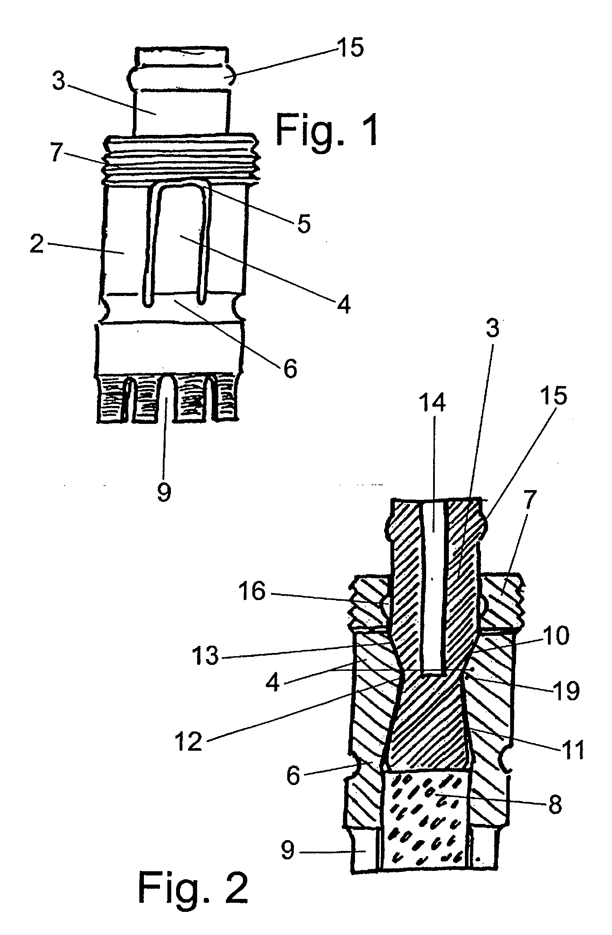

Wie in Figur 2 zu sehen ist, befindet sich in der Hülse 2 neben einem Abschnitt des Bolzens 3 auch ein Klebstoffreservoir 8, das in einer Aufnahme der Hülse 2 gehalten ist. Das Klebstoffreservoir 8 kann einen Einkomponentenklebstoff enthalten, der von einer Schutzhülle umgeben ist. Ebenso denkbar ist der Einsatz eines Mehrkomponentenklebstoffs, dessen Komponenten jeweils von Schutzhüllen umschlossen sind und so bis zum Verkleben voneinander getrennt sind. Ferner ist es möglich, einen thermoplastischen Schmelzklebstoff einzusetzen, der durch eine externe Wärmequelle oder ein elektromagnetisches bzw. elektrisches Wechselfeld erwärmt werden kann. Hierfür kann der Klebstoff elektrisch leitfähige Partikel und/oder Füllmaterialien mit ferromagnetischen, ferrimagnetischen oder piezoelektrischen Eigenschaften verfügen. Bei entsprechender Beschaffenheit des Klebstoffes kann dieser auch direkt oder indirekt über ein Mikrowellenverfahren erhitzt werden oder durch Konvektion über ein Metallteil wie beispielsweise dem Bolzen 3.

Der Bolzen 3 umfasst eine Anlaufschräge 10, die sich kegelstumpfförmig zu einer Verjüngung 12 erstreckt, bevor sich der Bolzen 3 an einem Endabschnitt 11 kegelstumpfförmig aufweitet. Demgegenüber ist an den Spreizarmen 4 auf der nach innen gewandten Seite ein Vorsprung 19 ausgebildet, der im Wesentlichen formschlüssig in die Verjüngung 12 und die kegelstumpfförmigen Abschnitte 10 und 11 eingreift. An den Spreizarmen 4 ist eine Anlaufschräge 13 ausgebildet.

Ferner ist in eine Längsrichtung des Bolzens 3 ein mittlerer Kanal 14 ausgebildet, in den ein weiteres Befestigungselement, wie eine Schraube oder ein Bolzen einfügbar ist. An einem oberen Endabschnitt des Bolzens 3 ist ein ringförmiger Vorsprung 15 ausgebildet, der formschlüssig in eine ringförmige Aussparung 16 einfügbar ist, die an dem oberen Ring 7 der Hülse 2 ausgebildet ist.

Das Verbindungselement kann aus der Transport- und Ausgangsposition gemäß Figur 2 besonders gut an einer Leichtbauplatte 20 montiert werden. Die Leichtbauplatte 20 umfasst eine erste Deckschicht 21 und eine zweite Deckschicht 22, zwischen denen eine Zwischenlage 23 angeordnet ist. Die Deckschichten 21 und 22 können aus einer Holzfaserplatte hergestellt sein, während die Zwischenlage 23 Hohlräume aufweist und beispielsweise aus Wabenpappe bestehen kann.

Zur Montage des Verbindungselementes 1 wird zunächst die Hülse 2 in der Ausgangsposition in eine Ausnehmung der Leichtbauplatte 20 eingefügt, bis eine untere Stirnseite der Hülse 2 benachbart zu einer inneren Seite der Deckschicht 22 angeordnet ist. Die Oberseite der Hülse 2 schließt dabei bündig mit der Oberseite der Leichtbauplatte 20 ab. Anschließend wird der Bolzen 3 in die Hülse 2 eingeschoben, wobei der Klebstoff 8 aus dem Reservoir gedrückt wird. Entweder wird dabei eine Umhüllung zerstört oder der Klebstoff 8 wurde vorher erweicht und kann somit durch die Öffnungen 9 aus der Hülse 2 strömen.

Beim Einfügen des Bolzens 3 sorgen die Anlaufschrägen 10 dafür, dass die Spreizarme 4 nach außen um die Verjüngung 6 verschwenkt werden und somit die obere Deckschicht 21 hintergreifen. Ferner wird der Klebstoff 8 aus dem Reservoir gedrückt und verteilt sich gleichmäßig über den Umfang der Hülse 2 zwischen einer Stirnseite 18 des Bolzens 3, der Hülse 2 und der Deckschicht 22. Der Bolzen 3 wird dabei soweit in die Hülse 2 eingeschoben, bis der ringförmige Vorsprung 15 in der Aufnahme 16 eingefügt ist, so dass Hülse 2 und Bolzen 3 eine verrastete Einheit bilden.

Anschließend wird der Klebstoff 8 ausgehärtet und eine Relativbewegung zwischen Bolzen 3 und Hülse 2 wird somit verhindert. Das Verbindungselement 1 ist somit sowohl durch die Spreizarme 4 mechanisch an der Leichtbauplatte 1 als auch über den Klebstoff 8 festgelegt. Zudem wirken Klemmkräfte im Bereich des Ringes 7.

An dem montierten Verbindungselement 1 kann durch Einfügen einer Schraube oder eines anderen Befestigungsmittels in dem Kanal 14 eine Montage eines Beschlagsteiles erfolgen.

In dem dargestellten Ausführungsbeispiel sind nur zwei Spreizarme 4 an der Hülse 2 vorgesehen. Es ist natürlich möglich, über den Umfang der Hülse 2 verteilt auch drei oder mehr Spreizarme 4 vorzusehen. Prinzipiell genügt ein Spreizarm 4. Eine Anordnung jedoch von zwei oder mehreren Spreizarmen, die sich jeweils an der Hülse 2 gegenüberstehen, erhöht die Haltekräfte.

In dem dargestellten Ausführungsbeispiel wird der Bolzen 3 so in die Hülse 2 eingefügt, dass eine ebene Oberseite ausgebildet wird. Es ist natürlich möglich, den Bolzen 3 schon mit weiteren Befestigungsmitteln zu versehen, die über die Hülse 2 auch in der Montageposition hervorstehen. Ein Bodenhalter könnte beispielsweise so gestaltet sein.

## Patentansprüche

1. Verbindungselement (1), insbesondere zur Befestigung eines Beschlagteiles an einer Leichtbauplatte (20), mit einer Hülse (2), an der ein Bolzen (3) verschiebbar gehalten ist, wobei der Bolzen (3) zur Befestigung des Verbindungselementes (1) an einer Leichtbauplatte (20) von einer hervorstehenden Ausgangsposition in die Hülse (2) in eine Montageposition einschiebbar ist, wobei an der Hülse (2) mindestens ein verschwenkbarer Spreizarm ausgebildet ist, der beim Einschieben des Bolzens (3) nach außen verschwenkt wird, und der Bolzen (3) und die Hülse (2) in der Montageposition mittels Klebstoff (8) aneinander fixiert sind, wobei in der Hülse (2) benachbart zu einer Stirnseite des Bolzens (3) in der Ausgangsposition ein Klebstoffreservoir (8) gebildet ist und die Hülse (2) benachbart zu dem Klebstoffreservoir (8) mehrere radiale Öffnungen (9) aufweist, durch die der Klebstoff (8) beim Reinschieben des Bolzens (2) austreten kann, **dadurch gekennzeichnet, dass** der mindestens eine Spreizarm (4) benachbart zu einem oberen Ring (7) an der Hülse (2) angeordnet ist, um eine Deckschicht (21) benachbart zu der Hülse (2) zu hintergreifen.

2. Verbindungselement nach Anspruch 1, **dadurch gekennzeichnet, dass** der Klebstoff (8) in eine Umhüllung eingekapselt ist.

3. Verbindungselement nach Anspruch 1, **dadurch gekennzeichnet, dass** der Klebstoff (8) ein Thermoplast ist und durch Wärmeeinwirkung verflüssigt werden kann.

4. Verbindungselement nach einem der Ansprüche 1 bis 3, **dadurch gekennzeichnet, dass** an dem Bolzen (3) und/oder dem Spreizarm (4) Anlaufschrägen (10, 13) zum Verschwenken des Spreizarmes (4) beim Einschieben des Bolzens (3) ausgebildet sind.

5. Verbindungselement nach einem der Ansprüche 1 bis 4, **dadurch gekennzeichnet, dass** der Bolzen (3) in der Ausgangsposition an der Hülse (2) verrastet ist.

6. Verbindungselement nach einem der Ansprüche 1 bis 5, **dadurch gekennzeichnet, dass** an dem Bolzen (3) eine kegelstumpfförmige Verjüngung (12) ausgebildet ist, die in einen nach innen hervorstehenden Vorsprung (19) an dem Spreizarm (4) im Wesentlichen formschlüssig eingreift.

7. Verbindungselement nach einem der Ansprüche 1 bis 6, **dadurch gekennzeichnet, dass** an dem Ring (7) mindestens eine Ausnehmung (16) vorgesehen ist, in die ein Vorsprung (15) an dem Bolzen (3) beim Einschieben rastend einfügbar ist.

8. Verbindungselement nach einem der Ansprüche 1 bis 7, **dadurch gekennzeichnet, dass** der Bolzen (3) einen sich in Längsrichtung erstreckenden Kanal (14) für ein Befestigungselement aufweist.

9. Leichtbauplatte (20), insbesondere für Möbel, **dadurch gekennzeichnet, dass** mindestens ein Verbindungselement nach einem der vorhergehenden Ansprüche an der Leichtbauplatte (20) festgelegt ist.

10. Leichtbauplatte nach Anspruch 9, **dadurch gekennzeichnet, dass** die Leichtbauplatte (20) zwei Deckschichten (21, 22) und eine mit Hohlräume versehene Zwischenlage (23) aufweist, wobei die Hülse (2) und der Bolzen (3) an der Innenseite einer Deckschicht (22) verklebt sind.

## Claims

1. Connecting element (1), in particular for fastening a fitting part to a lightweight building panel (20), having a sleeve (2), on which a pin (3) is held in a displaceable manner, wherein the pin (3), in order to fasten the connecting element (1) to a lightweight building panel (20), can be pushed from a protruding starting position into the sleeve (2) and into a mounting position, wherein at least one pivotable spreading arm is formed on the sleeve (2), said spreading arm being pivoted outwards when the pin (3) is pushed in, and the pin (3) and the sleeve (2) are fixed together by means of adhesive (8) in the mounting position, wherein an adhesive reservoir (8) is formed in the sleeve (2) adjacent to an end side of the pin (3) in the starting position and the sleeve (2) has a plurality of radial openings (9) adjacent to the adhesive reservoir (8), through which openings (9) the adhesive (8) can emerge when the pin (2) is pushed in, **characterized in that** the at least one spreading arm (4) is arranged adjacent to an upper ring (7) on the sleeve (2) in order to engage behind a cover layer (21) adjacent to the sleeve (2).

2. Connecting element according to Claim 1, **characterized in that** the adhesive (8) is encapsulated in a casing.

3. Connecting element according to Claim 1, **characterized in that** the adhesive (8) is a thermoplastic and can be liquefied by the action of heat.

4. Connecting element according to one of Claims 1 to 3, **characterized in that** run-on slopes (10, 13) for pivoting the spreading arm (4) when the pin (3) is pushed in are formed on the pin (3) and/or the spreading arm (4).

5. Connecting element according to one of Claims 1 to 4, **characterized in that** the pin (3) is latched to the sleeve (2) in the starting position.

6. Connecting element according to one of Claims 1 to 5, **characterized in that** a frustoconical taper (12) is formed on the pin (3) and engages in a substantially form-fitting manner in an inwardly protruding projection (19) on the spreading arm (4).

7. Connecting element according to one of Claims 1 to 6, **characterized in that** on the ring (7) there is provided at least one recess (16), into which a projection (15) on the pin (3) can be introduced with latching action when said pin (3) is pushed in.

8. Connecting element according to one of Claims 1 to 7, **characterized in that** the pin (3) has a channel (14) for a fastening element, said channel (14) extending in the longitudinal direction.

9. Lightweight building panel (20), in particular for furniture, **characterized in that** at least one connecting element according to one of the preceding claims is fixed to the lightweight building panel (20).

10. Lightweight building panel according to Claim 9, **characterized in that** the lightweight building panel (20) has two cover layers (21, 22) and an intermediate layer (23) provided with cavities, wherein the sleeve (2) and the pin (3) are adhesively bonded to the inside of one cover layer (22).

## Revendications

1. Elément de liaison (1), en particulier pour la fixation d'une partie de ferrure sur une plaque légère (20), avec une douille (2), sur laquelle est maintenu de manière mobile un boulon (3), sachant que le boulon (3) peut être inséré pour la fixation de l'élément de liaison (1) sur une plaque légère (20) d'une position de départ en saillie dans la douille (2) à une position de montage, sachant que sur la douille (2) est réalisé au moins un bras d'écartement pivotant qui est pivoté vers l'extérieur lors de l'insertion du boulon (3), et le boulon (3) et la douille (2) sont fixés l'un sur l'autre dans la position de montage à l'aide de colle (8), sachant qu'un réservoir de colle (8) est formé dans la douille (2) de manière contiguë à un côté avant du boulon (3) dans la position de départ et la douille (2) présente, à côté du réservoir de colle (8), plusieurs ouvertures radiales (9), par lesquelles la colle (8) peut sortir lors de l'insertion du boulon (2), **caractérisé en ce qu'**au moins un bras d'écartement (4) est disposé de manière contiguë à un anneau supérieur (7) sur la douille (2) afin de venir en prise derrière une couche de recouvrement (21) à côté de la douille (2).

2. Elément de liaison selon la revendication 1, **caractérisé en ce que** la colle (8) est insérée dans une enveloppe.

3. Elément de liaison selon la revendication 1, **caractérisé en ce que** la colle (8) est une matière thermoplastique qui peut être liquéfiée sous l'effet de la chaleur.

4. Elément de liaison selon l'une quelconque des revendications 1 à 3, **caractérisé en ce que** des biais d'attaque (10, 13) pour le pivotement du bras d'écartement (4) lors de l'insertion du boulon (3) sont réalisés sur le boulon (3) et/ou le bras d'écartement (4).

5. Elément de liaison selon l'une quelconque des revendications 1 à 4, **caractérisé en ce que** le boulon (3) est encliqueté dans la position de départ sur la douille (2).

6. Elément de liaison selon l'une quelconque des revendications 1 à 5, **caractérisé en ce qu'**un rétrécissement (12) en forme de cône tronqué est réalisé sur le boulon (3), lequel s'engage sensiblement positivement dans une saillie (19) dépassant vers l'intérieur sur le bras d'écartement (4).

7. Elément de liaison selon l'une quelconque des revendications 1 à 6, **caractérisé en ce qu'**au moins un évidement (16), dans lequel une saillie (15) peut être insérée par encliquetage sur le boulon (3) lors de l'insertion, est prévu sur l'anneau (7).

8. Elément de liaison selon l'une quelconque des revendications 1 à 7, **caractérisé en ce que** le boulon (3) présente un canal (14) s'étendant dans le sens longitudinal pour un élément de fixation.

9. Plaque légère (20), en particulier pour meuble, **caractérisée en ce qu'**au moins un élément de liaison selon l'une quelconque des revendications précédentes est fixé sur la plaque légère (20).

10. Plaque légère selon la revendication 9, **caractérisée en ce que** la plaque légère (20) présente deux couches de recouvrement (21, 22) et une couche intermédiaire (23) pourvue d'espaces creux, sachant que la douille (2) et le boulon (3) sont collés sur le côté intérieur d'une couche de recouvrement (22).
